# EUROPÄISCHE PATENTSCHRIFT

(11) **EP 1 782 914 B1**
(45) Veröffentlichungstag und Bekanntmachung des Hinweises auf die Patenterteilung: **19.09.2007**
(21) Anmeldenummer: 05024180.1
(22) Anmeldetag: 07.11.2005
(51) Int. Cl.: B23Q 11/08

(54) **Teleskopabdeckung für Werkzeugmaschine**
Telescopic cover for a machine-tool
Couverture télescopique pour machine-outil

(43) Veröffentlichungstag der Anmeldung: 09.05.2007
(73) Patentinhaber: Hennig Holding GmbH, 85551 Kirchheim (DE)
(72) Erfinder: Bauer, Rudolf, 85452 Moosinning/Eichenried (DE)
(74) Vertreter: Rau, Manfred

(56) Entgegenhaltungen:
- EP-A- 0 875 337

## Beschreibung

Die Erfindung betrifft eine Teleskopabdeckung für eine Werkzeugmaschine gemäß dem Oberbegriff von Anspruch 1.

Eine derartige Teleskopabdeckung ist aus der EP 0 875 337 A1 bekannt. Sie wird insbesondere zur Abdeckung einer Führungsbahn einer Werkzeugmaschine eingesetzt, um diese während des Betriebs der Werkzeugmaschine vor Verunreinigungen zu schützen. Die gegeneinander verschiebbaren Abdeckelemente weisen einen Bremsmechanismus auf, der ein keilförmiges Mitnahmeelement sowie gegen das Mitnahmeelement federnd, hydraulisch oder pneumatisch gepresste Kontaktelemente aufweist, wobei letztere als Bremsbacken dienen.

Die Teleskopabdeckung wird während des Betriebs oft aus- und eingefahren. Dabei wirken auf die einzelnen Abdeckelemente beim Beschleunigen und Abbremsen hohe Kräfte, insbesondere hohe Anschlagkräfte. Wenn die Teleskopabdeckung bei zukünftig zu erwartenden Anwendungen mit Geschwindigkeiten von über 60 m/min verfahren werden soll, resultieren sehr hohe Kräfte, die auf Dauer im Bereich des Mitnahmemechanismus zu einer Materialermüdung und zu einem Materialverschleiß führen können. Au-βerdem verursacht das harte Anschlagen der überstehenden Materialvorsprünge eine hohe Geräuschkulisse.

Aus der EP 0 370 078 B1 ist eine weitere Teleskopabdeckung bekannt, die einen Mitnahmemechanismus aufweist.

Der Mitnahmemechanismus ist hierbei im Wesentlichen durch einen Materialvorsprung gebildet, der im Bereich der Rückwand des Abdeckelements ein Stück über die obere Längsdeckwand des Abdeckelements hinaus steht. Bei einer großen Auszugsbewegung schlägt der überstehende Vorsprung an einen Gegenanschlag oder an einen Abstreifer des benachbarten Abdeckelements an und nimmt letzteres mit. Auch hierbei treten die bereits geschilderten nachteiligen Effekte auf.

Die Aufgabe der Erfindung besteht deshalb darin, eine Teleskopabdeckung der gattungsgemäßen Art anzugeben, die dauerhaft mit hohen Geschwindigkeiten und mit geringer Geräuschentwicklung verfahren werden kann.

Zur Lösung dieser Aufgabe wird eine Teleskopanordnung entsprechend den Merkmalen des Patentanspruchs 1 angegeben. Die erfindungsgemäße Ausgestaltung führt dazu, dass beim Aus- und Einfahren der Teleskopabdeckung ein hartes Anschlagen an Materialvorsprüngen bzw. an Rückwänden der Abdeckelemente unterbunden wird. Stattdessen erfolgt die Mitnahme des benachbarten Abdeckelements gedämpft. Je weiter sich das Kontaktelement beispielsweise bei einer Auszugsbewegung längs der ansteigenden Anlagefläche des Mitnahmeelements bewegt, desto höher wird der durch das Speicherelement verursachte Anpressdruck zwischen dem Kontaktelement und der Anlagefläche und desto höher wird als Folge davon der auf das benachbarte Abdeckelement einwirkende Mitnahmeeffekt. Die Stärke der mechanischen Spannung zwischen dem Kontaktelement und der Anlagefläche ist abhängig von der Position des Kontaktelements an der Anlagefläche. Anstelle des sehr abrupten Anschlagens kommt erfindungsgemäß ein kontinuierlich ansteigender Mitnahmeeffekt zum Einsatz. Dies ist materialschonend und reduziert auch die Geräuschentwicklung. Außerdem tritt eine Mitnahme nicht nur sukzessive und paarweise zwischen jeweils zwei benachbarten Abdeckelementen auf, sondern durchaus auch gleichzeitig zwischen mehreren Paaren benachbarter Abdeckelemente. Mit einem zumindest abschnittsweise gekrümmten Anstieg oder Abfall der Anlagefläche lässt sich der Verlauf der Anpresskraft in Längsrichtung und damit die Mitnahmewirkung zwischen den benachbarten Abdeckelementen sehr genau einstellen.

Wenn das Mitnahmeelement gemäß Anspruch 2 eine zweite vorzugsweise ebenfalls in Längsrichtung ansteigende oder abfallende Anlagefläche auf weist, und an der Rückwand des zweiten Abdeckelements ein zweites längs der zweiten Anlagefläche bewegbares Kontaktelement angebracht ist, ergibt sich eine sehr gute Führung und eine hohe mechanische Stabilität. Besonders einfach herzustellen ist die in Anspruch 3 angegebene keilförmige Ausgestaltung des Mitnahmeelements.

Wenn wie in Anspruch 4 angegeben ein erstes Mitnahmeelement am in Auszugsrichtung betrachtet vorderen Rand der Längswand und ein zweites Mitnahmeelement am hinteren Rand der Längswand angebracht ist, wird der vorteilhafte gedämpfte Mitnahmeeffekt in beiden Längsrichtungen, also sowohl in Auszugs- als auch in Einfahrrichtung, erzielt. Bei der günstigen Weiterbildung nach Anspruch 5 ist eine baugleiche Ausführung der beiden Mitnahmeelemente vorgesehen. Dadurch reduziert sich die benötigte Bauteilvielfalt und als Folge davon der Fertigungsaufwand.

Es ist aber auch möglich, einen in beide Längsrichtungen gedämpften Mitnahmeeffekt mittels eines einzigen gemäß Anspruch 6 ausgebildeten Mitnahmeelements zu erzielen.

Die nach Anspruch 7 vorgesehene Befestigung des Kontaktelements an der Rückwand bewirkt einen stabilen Aufbau und insbesondere eine stabile Kontaktierung der Anlagefläche durch das Kontaktelement, da auf diese Weise eine sehr hohe Anpresskraft eingestellt werden kann.

Günstig ist die Variante nach Anspruch 8, bei der das Kontaktelement eine drehbar gelagerte Rolle ist. Dies stellt eine verschleißarme Bewegung längs der Anlagefläche sicher und führt zu einer langen Benutzungsdauer.

Wenn, wie in Anspruch 9 angegeben, an beiden Längsseitenwänden jeweils ein Mitnahmemechanismus vorgesehen ist, resultiert eine sehr gute Führung und eine hohe mechanische Stabilität. Zwischen den benachbarten Abdeckelementen kann es dann beim Ein- und Ausfahren praktisch keine unerwünschten Verkippungen oder Drehmomente geben.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: eine teilweise geschnittene Vorderansicht eines Ausführungsbeispiels einer Teleskopabdeckung mit gegeneinander verschiebbaren und über Mitnahmemechanismen gekoppelten Abdeckelementen,
- Fig. 2: den Längsschnitt II - II gemäß Fig. 1 in Explosionsdarstellung,
- Fig. 3: ein Ausführungsbeispiel eines an den Rückwänden der Abdeckelemente gemäß Fig. 1 angebrachten Kontaktmoduls mit Rollen als Kontaktelementen in Rückansicht,
- Fig. 4 und 5: das Kontaktmodul gemäß Fig. 3 in Verbindung mit einem an den Seitenlängswänden der Abdeckelemente gemäß Fig. 1 angebrachten Mitnahmeelement in Seitenansicht,
- Fig. 6 bis 8: die Teleskopabdeckung gemäß Fig. 1 in eingefahrener, teils bzw. komplett ausgefahrener Stellung in geschnittener Seitenansicht und
- Fig. 9: ein weiteres Ausführungsbeispiel eines an den Seitenlängswänden der Abdeckelemente gemäß Fig. 1 angebrachten Mitnahmeelements.

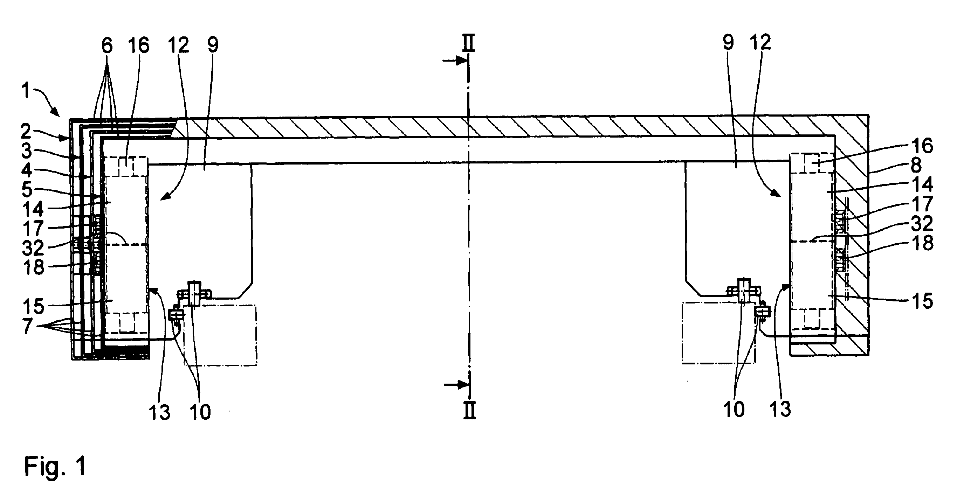

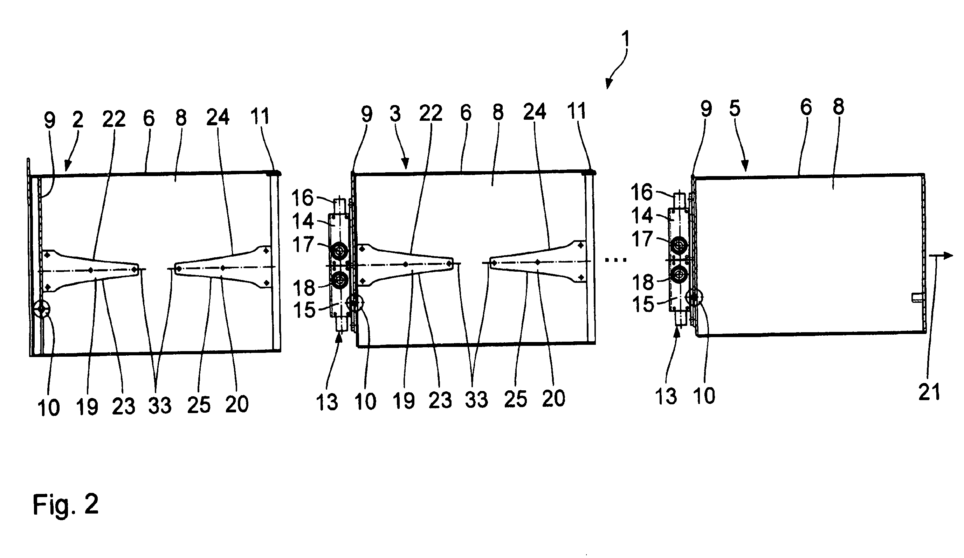

In Fig. 1 ist ein Ausführungsbeispiel einer Teleskopabdeckung 1 für eine nicht näher dargestellte Werkzeugmaschine in teilweise geschnittener Vorderansicht gezeigt. Die Teleskopabdeckung 1 umfasst mehrere, beim Ausfiihrungsbeispiel insgesamt vier, teleskopartig in einer Längsrichtung gegeneinander verschiebbare Abdeckelemente 2, 3, 4 und 5. Die Längsrichtung ist dabei gleich der Normalrichtung zur Zeichnungsebene von Fig. 1. Die Abdeckelemente 2 bis 5 sind kastenförmig ausgebildet und weisen jeweils eine Längsdeckwand 6, zwei Längsseitenwände 7 und 8 sowie eine teilausgeschnittene Rückwand 9 auf. An der Rückwand 9 sind zwei Gleitelemente 10 angebracht, die auf einer nicht gezeigten Führungsbahn der Werkzeugmaschine gleitfähig aufliegen. Gegeneinander sind die Abdeckelemente 2 bis 5 durch in Fig. 2 gezeigte Abstreifer 11 abgestützt, die innen an der dem jeweils benachbarten Abdeckelement 3 bis 5 zugewandten Kante angebracht sind.

Jeweils zwischen zwei benachbarten der Abdeckelemente 2 bis 5 ist im Bereich der beiden Längsseitenwände 7 und 8 jeweils ein Mitnahmemechanismus 12 angeordnet. Die Mitnahmemechanismen 12 umfassen mehrere Teilkomponenten, von denen in Fig. 1 nur ein an der Rückwand 9 montiertes Kontaktmodul 13 wiedergegeben ist. Das Kontaktmodul 13 hat zwei Schlitten 14 und 15, die längs einer als Führung ausgebildeten feststehenden Welle 16 senkrecht zur Längsrichtung der Teleskopabdeckung 1 bewegbar sind. An jedem der Schlitten 14 und 15 ist als Kontaktelement eine drehbar gelagerte Rolle 17 bzw. 18 montiert. Die Rollen 17 und 18 stehen seitlich über die jeweils maßgebliche Längsseitenwand 7 oder 8 hinaus.

Weitere Komponenten der Mitnahmemechanismen 12 gehen aus der Explosionsdarstellung gemäß Fig. 2 hervor, die den in Fig. 1 mit II - II bezeichneten Längsschnitt zeigt. Es handelt sich um im Wesentlichen keilartig geformte flächige Mitnahmeelemente 19 und 20, die in einer Auszugsrichtung 21 betrachtet hinten bzw. vorne an der Innenseite der Längsseitenwände 7 und 8 befestigt sind. Die Auszugsrichtung 21 bezeichnet dabei die Längsrichtung beim Auseinanderbewegen der Abdeckelemente 2 bis 5.

Die Mitnahmeelemente 19 zeigen mit ihrer Spitze nach vorne, so dass eine in Auszugsrichtung 21 abfallende obere Anlagefläche 22 und eine in Auszugsrichtung 21 ansteigende untere Anlagefläche 23 gebildet sind. Dagegen zeigen die Mitnahmeelemente 20 mit ihrer Spitze nach hinten. Dementsprechend haben sie eine in Auszugsrichtung 21 ansteigende obere Anlagefläche 24 und eine in Auszugsrichtung 21 abfallende untere Anlagefläche 25. Die Anlageflächen 22 bis 25 haben Abschnitte mit linearem und solche mit gekrümmtem Anstieg oder Abfall. Die Mitnahmeelemente 19 und 20 sind baugleich, jedoch mit unterschiedlicher Orientierung montiert.

Das hintere und das vordere Abdeckelement 2 bzw. 5 unterscheiden sich von den inneren Abdeckelementen 3 und 4, die abgesehen von den äußeren Abmessungen im Wesentlichen gleich aufgebaut sind. Aufgrund dieser hochgradigen Ähnlichkeit ist das Abdeckelement 4 in Fig. 2 nicht mit dargestellt. Im Übrigen kann je nach gewünschter Auszugslänge eine beliebige Anzahl innerer Abdeckelemente vorgesehen sein. Die Rückwand 9 des Abdeckelements 2 ist ebenso wie eine Vorderwand des Abdeckelements 5 an einem Maschinenteil der Werkzeugmaschine befestigt. Das hintere Abdeckelement 2 weist nur die Mitnahmeelemente 19 und 20, jedoch kein Kontaktmodul 13 auf. Beim vorderen Abdeckelement 5 verhält es sich genau umgekehrt. Es ist nur das Kontaktmodul 13 vorgesehen. Dagegen enthalten die inneren Abdeckelemente 3 und 4 jeweils alle Komponenten des Mitnahmemechanismus 12.

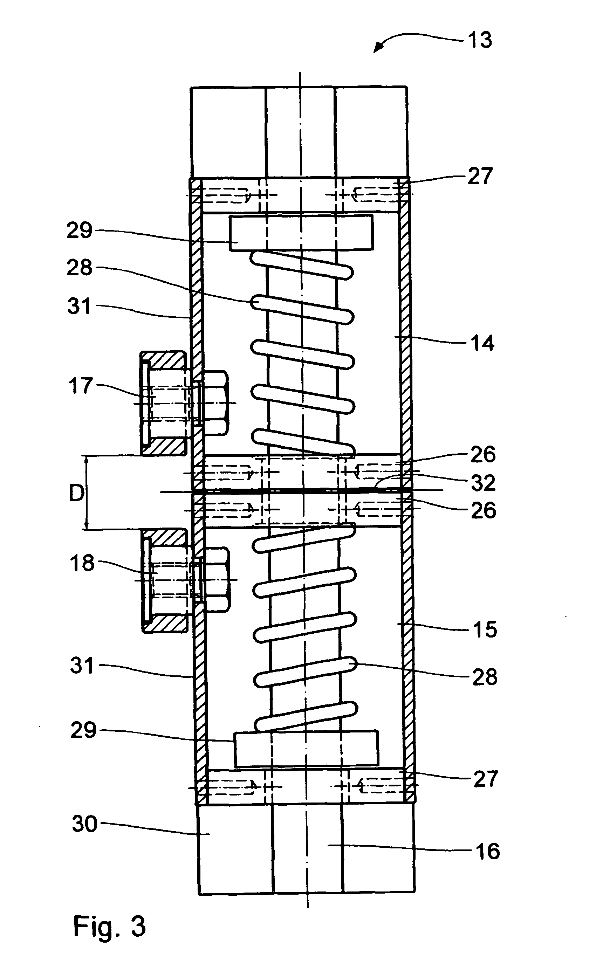

In Fig. 3 ist ein Ausführungsbeispiel der an den Rückwänden 9 der Abdeckelemente 3 bis 5 angebrachten Kontaktmodule 13 in einer Schnittansicht von hinten, also mit Blickrichtung in die Auszugsrichtung 21 gezeigt. Die im Wesentlichen baugleichen Schlitten 14 und 15 sind ohne ihre rückwärtigen Wände dargestellt. Die Schlitten 14 und 15 haben jeweils eine zentrale und eine äußere Führungswand 26 bzw. 27, die jeweils eine Öffnung aufweisen, durch die die Welle 16 hindurchgeführt ist. Die zentrale Führungswand 26 bildet einen ersten Federsitz für eine um die Welle 16 platzierte Feder 28. Ein zweiter Federsitz ist durch eine fest mit der Welle 16 verbundene Anschlagplatte 29 gebildet, die zwischen der zentralen und der äußeren Führungswand 26 bzw. 27 angeordnet ist. Auch die Anschlagplatte 29 hat eine Öffnung, durch die die Welle 16 hindurchgeführt ist und an der eine feste Verbindung mit der Welle 16 vorgesehen ist. Die Anschlagplatte 29 ist fest mit einer Grundplatte 30 verbunden, die ihrerseits an der Rückwand 9 befestigt ist. Die genannten festen Verbindungen sind beispielsweise als Schraubverbindungen ausgeführt.

Mittels der Anschlagplatte 29 und der Grundplatte 30 ist die Welle 16 ortsfest in Bezug zur Rückwand 9 montiert, wohingegen die Schlitten 14 und 15 längs der Welle 16 bewegbar sind. Die insbesondere aus Messing hergestellten Führungswände 26 und 27 ermöglichen eine Gleitbewegung längs der Welle 16 und der Grundplatte 30, die beide vorzugsweise aus einem Stahl hergestellt sind.

Die Rollen 17 und 18 sind an einer die zentrale und die äußere Führungswand 26 bzw. 27 verbindenden Seitenwand 31 des Schlittens 14 bzw. 15 angebracht. Die Rollen 17 und 18 sind symmetrisch zu einer Mitte 32 des Kontaktmoduls 13 angeordnet. Ihre Laufflächen haben einen Abstand D voneinander, der auch bei der in Fig. 3 gezeigten Grundposition des Kontaktmoduls 13, bei der die Schlitten 14 und 15 mit ihren zentralen Führungswänden 26 aneinander stoßen, größer als null ist.

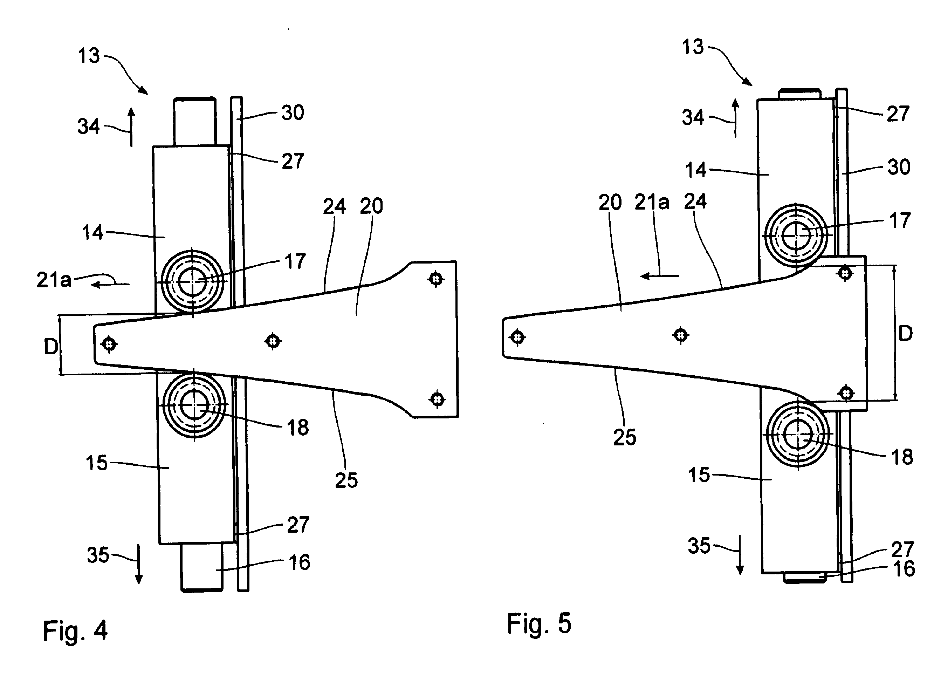

Im Folgenden wird auch unter Bezugnahme auf die Darstellungen gemäß Fig. 4 bis 8 die Wirkungsweise der Teleskopabdeckung 1 und insbesondere der Mitnahmemechanismen 12 beschrieben.

Die Kontaktmodule 13 und die jeweils zugehörigen Mitnahmeelemente 19 und 20 sind relativ zueinander so positioniert, dass die Mitte 32 des Kontaktmoduls 13 und eine Mittenachse 33 der Mitnahmeelemente 19 und 20 fluchten. Bei einer Ein- oder Ausfahrbewegung der Teleskopabdeckung 1 greifen die Mitnahmeelemente 19 oder 20 eines der Abdeckelemente 2 bis 4 beim jeweils benachbarten Abdeckelement 3 bis 5 in die lichte Weite zwischen den Rollen 17 und 18 ein.

Wie aus Fig. 4 ersichtlich kommt es bei einer bestimmten Relativposition der benachbarten Abdeckelemente 2 und 3, 3 und 4 oder 4 und 5 so erstmals zu einem Anliegen der Rolle 17 an der ansteigenden Anlagefläche 24 des Mitnahmeelements 20 und der Rolle 18 an der abfallenden Anlagefläche 25 des Mitnahmeelements 20. Ab diesem Zeitpunkt wirkt ein Mitnahmeeffekt zwischen den benachbarten Abdeckelementen 2 und 3, 3 und 4 oder 4 und 5.

Wird die Bewegung der Teleskopabdeckung 1 in Einfahrrichtung 21a fortgesetzt, bewegen sich die Rollen 17 und 18 längs der Anlageflächen 24 bzw. 25, wobei die Schlitten 14 und 15 gegen die Kraftwirkung der Federn 28 längs der Welle 16 nach außen in Richtung der senkrecht zur Auszugsrichtung 21 orientierten Bewegungspfeile 34 und 35 verschoben werden. Der Abstand D vergrößert sich. Die Federn 28 pressen die Rollen 17 und 18 mit einer von der Position der Rollen 17 und 18 auf den Anlageflächen 24 bzw. 25 abhängigen mechanischen Spannung (= Druck) gegen die Anlageflächen 24 bzw. 25. Entsprechend dem ansteigenden und abfallenden Verlauf der Anlageflächen 24 bzw. 25 nimmt diese Krafteinwirkung bis zum Erreichen der in Fig. 5 gezeigten Endposition kontinuierlich zu. Dadurch steigt auch der Grad der mechanischen Kopplung zwischen den benachbarten Abdeckelementen 2 und 3, 3 und 4 oder 4 und 5 und damit die Mitnahmewirkung stetig an. Insgesamt ergibt sich aufgrund der Federkrafteinwirkung ein gedämpfter Mitnahmeeffekt.

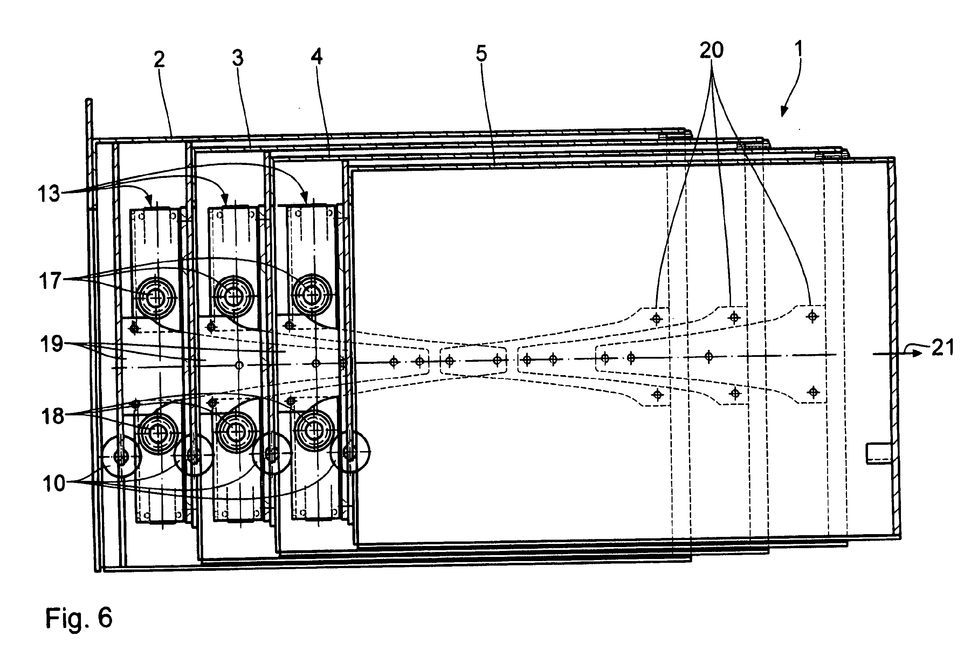

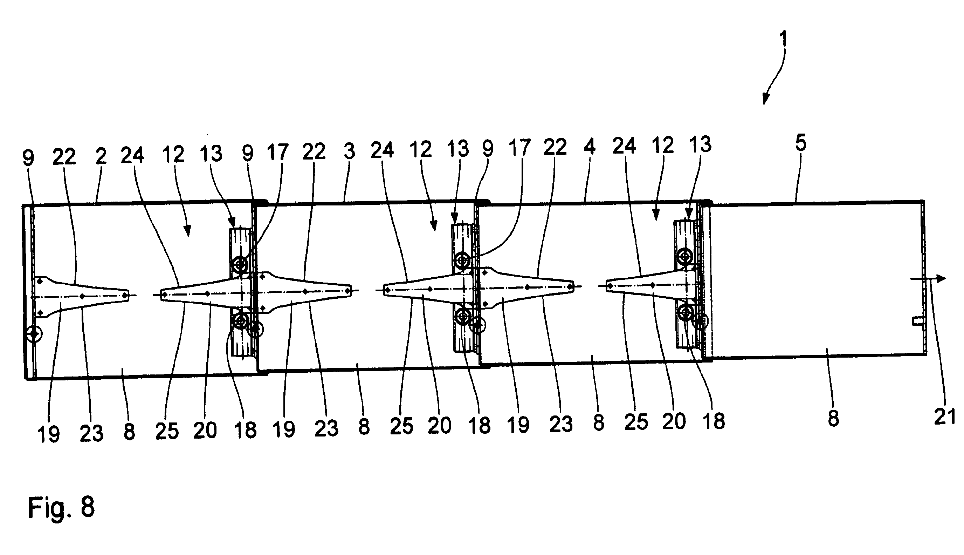

In Fig. 6 bis 8 ist die Teleskopabdeckung 1 in eingefahrener, teils bzw. komplett ausgefahrener Stellung in geschnittener Seitenansicht gezeigt. In der eingefahrenen (Fig. 6) und der komplett ausgefahrenen (Fig. 8) Stellung befinden sich die Rollen 17 und 18 der Kontaktmodule 13 an den jeweiligen Endpositionen auf den Anlageflächen 22 und 23 der Mitnahmeelemente 19 bzw. auf den Anlageflächen 24 und 25 der Mitnahmeelemente 20. Die Schlitten 14 und 15 befinden sich dann am weitesten auseinander gefahren.

Die Mitnahmeelemente 19 bewirken beim Einfahren einen gedämpften Mitnahmeeffekt, während die Mitnahmeelemente 20 für einen gedämpften Mitnahmeeffekt beim Ausfahren verantwortlich sind. Die Wirkungsweise ist in beiden Fällen identisch und entspricht der vorstehend beschriebenen.

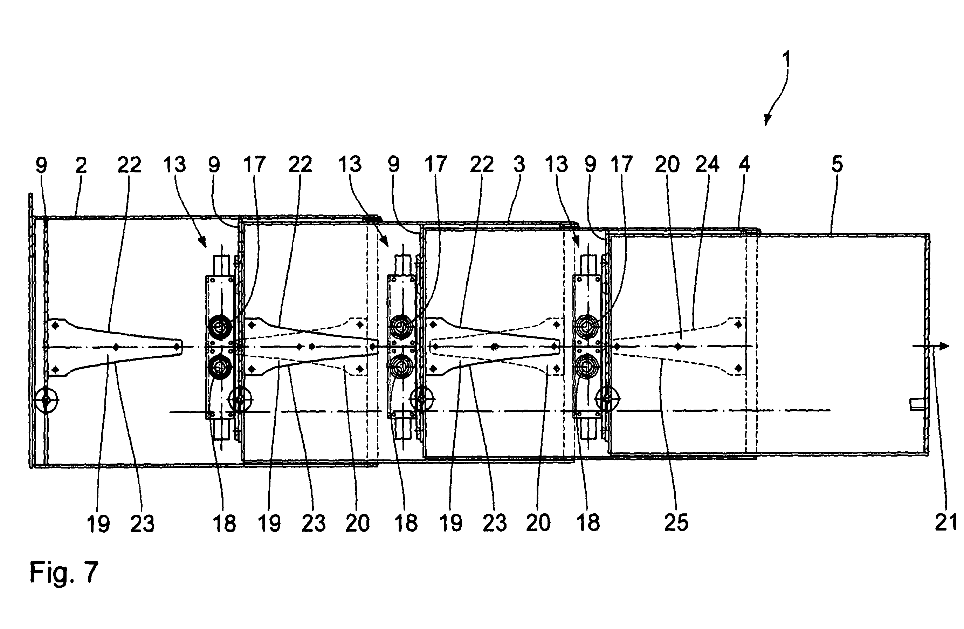

Bei der in Fig. 7 gezeigten nur teilweise ausgefahrenen Stellung befinden sich die Kontaktmodule 13 jeweils im Zwischenbereich zwischen den Mitnahmeelementen 19 und 20. Keine der Rollen 17 und 18 liegt an einer der Anlageflächen 22 bis 25 an, so dass die Schlitten 14 und 15 jeweils in der Mitte 32 aneinander stoßen. Dieser Zustand setzt voraus, dass alle Abdeckelemente 2 bis 5 absolut gleichmäßig auseinander oder ineinander fahren. Die im Wesentlichen identisch ausgebildeten Mitnahmemechanismen 12 zwischen den benachbarten Abdeckelementen 2 und 3, 3 und 4 sowie 4 und 5 bewirken zwar vorteilhafterweise eine möglichst gleichzeitige und gleichmäßige Bewegung der Abdeckelemente 3 bis 5, wobei angenommen ist, dass das Abdeckelement 2 an einem statischen Maschinenteil der Werkzeugmaschine befestigt ist.

Ein absoluter Gleichlauf hängt aber auch von äußeren Betriebsbedingungen, wie beispielsweise der Verschmutzung auf der jeweiligen Längsdeckwand 6, ab. Deshalb kann es in der Praxis vorkommen, dass sich nicht alle Kontaktmodule 13 in der genau gleichen Relativposition zu den zugehörigen Mitnahmeelementen 19 und 20 befinden. Abweichungen können sich auch ergeben, wenn die Abdeckelemente 2 bis 5 eine unterschiedliche Längsabmessung haben. Dennoch ermöglichen die verwendeten gedämpften Mitnahmemechanismen 12 ein insgesamt sehr materialschonendes sowie verschleiß- und geräuscharmes Bewegen der Teleskopabdeckung 1.

Das beschriebene Prinzip der gedämpften Mitnahme lässt sich flexibel an den jeweiligen Anwendungsfall anpassen.

So sind beispielsweise andere Ausführungsformen der Mitnahmeelemente 19 und 20 möglich. Insbesondere die Kontur der abfallenden oder ansteigenden Anlageflächen 22 bis 25 kann in weiten Grenzen variiert werden. Vorstellbar sind Varianten, bei denen der Anstieg oder der Abfall nicht linear, sondern ausschließlich gekrümmt ausgeführt ist. Möglich sind auch unterschiedliche Krümmungsradien. Über die Auswahl dieser Kontur kann der Verlauf der Anpresskraft und damit der Mitnahmeeffekt je nach Einzelfallanforderung eingestellt werden.

Ebenso kann der Mitnahmemechanismus 13 nicht zweiseitig, sondern einseitig ausgeführt sein, so dass also nur eine Rolle 17 oder 18 und nur obere oder untere Anlageflächen 22 und 24 bzw. 23 und 25 vorgesehen sind.

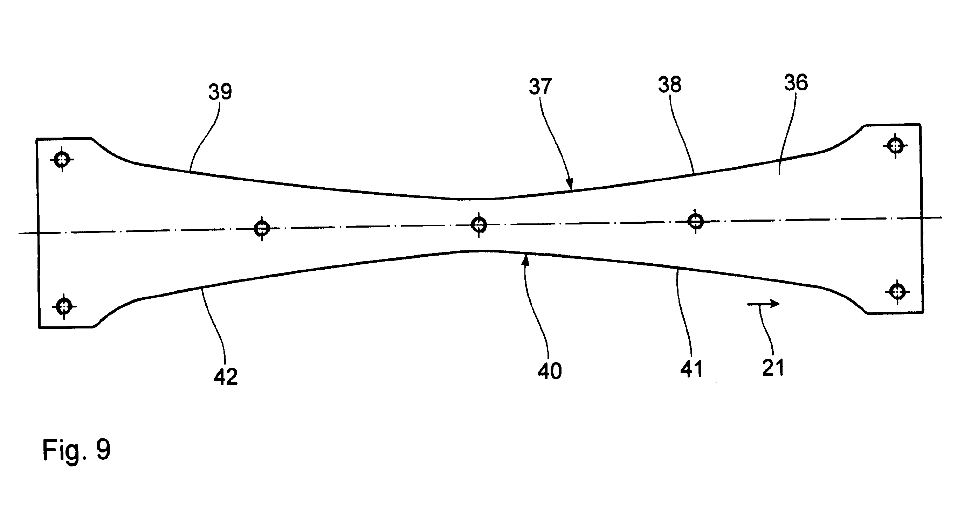

Ein weiteres Ausführungsbeispiel eines Mitnahmeelements 36 ist in Fig. 9 gezeigt. Es stellt eine Kombination der Mitnahmeelemente 19 und 20 dar. Eine obere Anlagefläche 37 weist im in Auszugsrichtung 21 betrachtet vorderen Bereich einen ansteigenden Teilabschnitt 38 und im in Auszugsrichtung 21 betrachtet hinteren Bereich einen abfallenden Teilabschnitt 39 auf. Bei einer unteren Anlagefläche 40 sind die Verhältnisse umgekehrt. Vorne ist ein abfallender Teilabschnitt 41, hinten ein ansteigender Teilabschnitt 42. Die Rollen 17 und 18 stehen dann dauerhaft in Kontakt mit den Anlageflächen 37 und 40. Dies reduziert die Geräuschentwicklung.

Alternativ zu den Rollen 17 und 18 können grundsätzlich auch Kontaktelemente in Gestalt von Gleitelementen zum Einsatz kommen. Ebenso kann die Feder 28 durch ein anderes Speicherelement, beispielsweise einen elastischen Formkörper oder ein magnetisches Element, ersetzt werden. Die Mitnahmeelemente 19, 20 und 36 können je nach Bedarf aus einem Metall, einer Metalllegierung oder aus einem Kunststoff hergestellt sein.

## Patentansprüche

1. Teleskopabdeckung für eine Werkzeugmaschine mit
- mehreren teleskopartig in einer Längsrichtung (21) gegeneinander verschiebbaren Abdeckelementen (2, 3, 4, 5), von denen benachbarte Abdeckelemente jeweils durch ein erstes und ein zweites Abdeckelement (2, 3; 3, 4; 4, 5) gebildet sind, und
- einem jeweils zwischen dem ersten und dem zweiten Abdeckelement (2, 3; 3, 4; 4, 5) angeordneten Mitnahmemechanismus (12),
wobei
- der Mitnahmemechanismus (12)
-- ein an einer Längswand (7, 8) des ersten Abdeckelements (2; 3; 4) angebrachtes Mitnahmeelement (19, 20; 36) mit einer in Längsrichtung (21) ansteigenden oder abfallenden Anlagefläche (22, 24; 36) und
-- ein an einer Rückwand (9) des zweiten Abdeckelements (3; 4; 5) gegen ein Speicherelement (28) verschiebbar angeordnetes und längs der Anlagefläche (22, 24; 36) bewegbares Kontaktelement (17), das unter einer von dem Speicherelement (28) bewirkten und von einer Position in Längsrichtung (21) abhängigen mechanischen Spannung an der Anlagefläche (22, 24) anliegt,
umfasst,
**dadurch gekennzeichnet,**
**dass** das Mitnahmeelement (19, 20; 36) zumindest einen Abschnitt mit einem konkav gekrümmten Anstieg oder Abfall der Anlagefläche (22, 23, 24, 25; 37,40) aufweist.

2. Teleskopabdeckung nach Anspruch 1, **dadurch gekennzeichnet, dass** das Mitnahmeelement (19, 20; 36) eine zweite Anlagefläche (23, 25; 40) aufweist, und an der Rückwand (9) des zweiten Abdeckelements (3; 4; 5) ein zweites längs der zweiten Anlagefläche (23, 25; 40) bewegbares Kontaktelement (18) angebracht ist.

3. Teleskopabdeckung nach Anspruch 1, **dadurch gekennzeichnet, dass** das Mitnahmeelement (19, 20) eine Keilform aufweist.

4. Teleskopabdeckung nach Anspruch 1, **dadurch gekennzeichnet, dass** das Mitnahmeelement (20) an einem vorderen Rand der Längswand (7, 8) angebracht ist und eine in eine Auszugsrichtung (21) ansteigende Anlagefläche (24) aufweist, und an einem hinteren Rand der Längswand (7, 8) des ersten Abdeckelements (2; 3; 4) ein zweites Mitnahmeelement (20) mit einer in Auszugsrichtung (21) abfallenden Anlagefläche (22) angebracht ist.

5. Teleskopabdeckung nach Anspruch 4, **dadurch gekennzeichnet, dass** das die beiden Mitnahmeelemente (19, 20) baugleich sind.

6. Teleskopabdeckung nach Anspruch 1, **dadurch gekennzeichnet, dass** die Anlagefläche (37) des Mitnahmeelements (36) in einem vorderen Bereich der Längswand (7, 8) in eine Auszugsrichtung (21) ansteigt und in einem hinteren Bereich der Längswand (7, 8) in Auszugsrichtung (21) abfällt.

7. Teleskopabdeckung nach Anspruch 1, **dadurch gekennzeichnet, dass** das Kontaktelement (17, 18) mittels eines längs einer senkrecht zur Längsrichtung (21) orientierten Führung (16) und gegen die Kraft des Speicherelements (28) verschiebbaren Schlittens (14, 15) an der Rückwand (9) befestigt ist.

8. Teleskopabdeckung nach Anspruch 1, **dadurch gekennzeichnet, dass** das Kontaktelement eine drehbar gelagerte Rolle (17, 18) ist.

9. Teleskopabdeckung nach Anspruch 1, **dadurch gekennzeichnet, dass** zwischen dem ersten und dem zweiten Abdeckelement (2, 3; 3, 4; 4, 5) zwei Mitnahmemechanismen (12) vorgesehen sind, von denen jeweils einer an einer von zwei Längsseitenwänden (7, 8) angeordnet ist.

## Claims

1. Telescopic cover for a machine tool comprising
- a plurality of cover elements (2, 3, 4, 5) which can be moved with respect to one another in telescopic manner in a longitudinal direction (21), and of which adjacent cover elements are formed in each case by a first and a second cover element (2, 3; 3, 4; 4, 5), and
- an entrainment mechanism (12) arranged between the first and the second cover elements (2, 3; 3, 4; 4, 5) respectively,
wherein
- the entrainment mechanism (12) comprises
-- an entrainment element (19, 20; 36) which is fitted on a longitudinal wall (7, 8) of the first cover element (2; 3; 4) and has a contact surface (22, 24; 36) which slopes in a rising or falling manner in the longitudinal direction (21) and
-- a contact element (17) which is arranged on a rear wall (9) of the second cover element (3; 4; 5) so as to be displaceable with respect to a storage element (28) and can move along the contact surface (22, 24; 36) and which rests on the contact surface (22, 24) under a mechanical stress which is produced by the storage element (28) and is dependent on a position in the longitudinal direction (21),
**characterised in that** the entrainment element (19, 20; 36) has at least one portion where the contact surface (22, 23, 24, 25; 37, 40) rises or falls in a concavely curved manner.

2. Telescopic cover according to claim 1, **characterised in that** the entrainment element (19, 20; 36) has a second contact surface (23, 25; 40), and on the rear wall (9) of the second cover element (3; 4; 5) there is fitted a second contact element (18) which can be moved along the second contact surface (23, 25; 40).

3. Telescopic cover according to claim 1, **characterised in that** the entrainment element (19, 20) is wedge-shaped.

4. Telescopic cover according to claim 1, **characterised in that** the entrainment element (20) is fitted on a leading edge of the longitudinal wall (7, 8) and has a contact surface (24) rising in an extension direction (21), and there is fitted on a trailing edge of the longitudinal wall (7, 8) of the first cover element (2; 3; 4) a second entrainment element (20), which has a contact surface (22) falling in the extension direction (21).

5. Telescopic cover according to claim 4, **characterised in that** the two entrainment elements (19, 20) are identical in construction.

6. Telescopic cover according to claim 1, **characterised in that** the contact surface (37) of the entrainment element (36) rises in an extension direction (21) in a leading region of the longitudinal wall (7, 8), and falls in the extension direction (21) in a trailing region of the longitudinal wall (7, 8).

7. Telescopic cover according to claim 1, **characterised in that** the contact element (17, 18) is fixed on the rear wall (9) by means of a slide (14, 15) which can be displaced against the force of the storage element (28) along a guide (16) oriented perpendicularly to the longitudinal direction (21).

8. Telescopic cover according to claim 1, **characterised in that** the contact element is a rotatably mounted roller (17, 18).

9. Telescopic cover according to claim 1, **characterised in that** between the first and the second cover elements (2, 3; 3, 4; 4, 5), two entrainment mechanisms (12) are provided, each of which is arranged on one of two longitudinal side walls (7, 8).

## Revendications

1. Protection télescopique pour une machine-outil comprenant
- plusieurs éléments de recouvrement (2, 3, 4, 5) pouvant coulisser les uns par rapport aux autres de façon télescopique dans un sens longitudinal (21), parmi lesquels des éléments de recouvrement adjacents sont formés à chaque fois par un premier et un deuxième élément de recouvrement (2, 3 ; 3, 4 ; 4, 5), et
- un mécanisme d'entraînement (12) disposé à chaque fois entre le premier et le deuxième élément de recouvrement (2, 3 ; 3, 4 ; 4, 5),
dans laquelle
- le mécanisme d'entraînement (12) comprenant
-- un élément d'entraînement (19, 20 ; 36) disposé sur une paroi longitudinale (7, 8) du premier élément de recouvrement (2 ; 3 ; 4) et doté d'une surface d'appui (22, 24 ; 36) montante ou descendante dans le sens longitudinal (21) et
-- un élément de contact (17) disposé sur une paroi arrière (9) du deuxième élément de recouvrement (3 ; 4 ; 5) de manière à pouvoir coulisser à l'encontre de la force d'un élément d'accumulation (28) et déplaçable le long de la surface d'appui (22, 24 ; 36), et qui vient en contact avec la surface d'appui (22, 24) sous l'effet d'un effort mécanique produit par l'élément d'accumulation (28) et dépendant d'une position dans le sens longitudinal (21),
**caractérisée en ce que**
l'élément d'entraînement (19, 20 ; 36) comporte au moins une section avec une montée ou chute de la surface d'appui (22, 23, 24, 25 ; 37, 40) courbée de façon concave.

2. Protection télescopique selon la revendication 1, **caractérisée en ce que** l'élément d'entraînement (19, 20 ; 36) présente une deuxième surface d'appui (23, 25 ; 40), et un deuxième élément de contact (18) déplaçable le long de la deuxième surface d'appui (23, 25 ; 40) est fixé à la paroi arrière (9) du deuxième élément de recouvrement (3 ; 4 ; 5).

3. Protection télescopique selon la revendication 1, **caractérisée en ce que** l'élément d'entraînement (19, 20) présente une forme de coin.

4. Protection télescopique selon la revendication 1, **caractérisée en ce que** l'élément d'entraînement (20) est fixé à un bord avant de la paroi longitudinale (7, 8) et présente une surface d'appui montante (24) dans un sens de déploiement (21), et un deuxième élément d'entraînement (20) avec une surface d'appui descendante (22) dans le sens de déploiement (21) est fixé à un bord arrière de la paroi longitudinale (7, 8) du premier élément de recouvrement (2 ; 3 ; 4).

5. Protection télescopique selon la revendication 4, **caractérisée en ce que** les deux éléments d'entraînement (19, 20) sont de conception similaire.

6. Protection télescopique selon la revendication 1, **caractérisée en ce que** la surface d'appui (37) de l'élément d'entraînement (36) monte dans un sens de déploiement (21) dans une zone avant de la paroi longitudinale (7, 8) et descend dans le sens de déploiement (21) dans une zone arrière de la paroi longitudinale (7, 8).

7. Protection télescopique selon la revendication 1, **caractérisée en ce que** l'élément de contact (17, 18) est fixé à la paroi arrière (9) par l'intermédiaire d'un coulisseau (14, 15) pouvant coulisser le long d'un guidage (16) - orienté perpendiculairement au sens longitudinal (21) - et à l'encontre de la force de l'élément d'accumulation (28).

8. Protection télescopique selon la revendication 1, **caractérisée en ce que** l'élément de contact est un galet (17, 18) logé de façon pivotante.

9. Protection télescopique selon la revendication 1, **caractérisée en ce que**, entre le premier et le deuxième élément de recouvrement (2, 3 ; 3, 4 ; 4, 5), il est prévu deux mécanismes d'entraînement (12), chacun des deux étant disposé sur une des deux parois latérales longitudinales (7, 8).
